# EUROPÄISCHE PATENTSCHRIFT

(11) **EP 1 438 519 B1**
(45) Veröffentlichungstag und Bekanntmachung des Hinweises auf die Patenterteilung: **11.05.2005**
(21) Anmeldenummer: 02772391.5
(22) Anmeldetag: 23.10.2002
(51) Int. Cl.: F16D 66/00

(54) **BETÄTIGUNGSEINHEIT MIT EINEM KRAFTWANDLER FÜR EINE SCHEIBENBREMSE**
DISK BRAKE
FREIN A DISQUE

(30) Priorität: 24.10.2001 DE 10152422
(43) Veröffentlichungstag der Anmeldung: 21.07.2004
(73) Patentinhaber: Lucas Automotive GmbH, 56070 Koblenz (DE)
(72) Erfinder: GILLES, Leo, 56077 Koblenz (DE)
(74) Vertreter: Röthinger, Rainer, Dipl.-Phys.
(86) Internationale Anmeldenummer: PCT/EP2002/011847
(87) Internationale Veröffentlichungsnummer: WO 2003/035444

(56) Entgegenhaltungen:
- WO-A-99/37939
- WO-A-99/45292
- DE-A- 4 110 389
- DE-A- 4 112 371
- DE-U- 29 914 060
- US-B1- 6 230 854

## Beschreibung

Die Erfindung betrifft eine Scheibenbremse mit zwei zur Erzeugung einer Klemmkraft beidseits an eine Bremsscheibe anpressbaren Bremsbacken und einer Aktuatoreinrichtung zur Betätigung mindestens einer der Bremsbacken.

Eine solche Scheibenbremse ist aus der WO88/04741 bekannt. Die bei dieser Scheibenbremse im Rahmen eines Bremsvorgangs auftretenden Kräfte lassen sich in Klemmkraft (auch Axialkraft, Querkraft oder Normalkraft genannt) und Umfangskraft (auch Reibkraft genannt) unterteilen. Als Klemmkraft wird diejenige Kraftkomponente bezeichnet, welche von einer Bremsbacke senkrecht zur Ebene der Bremsscheibe in die Bremsscheibe eingeleitet wird. Unter der Umfangskraft hingegen versteht man diejenige Kraftkomponente, welche aufgrund der Bremsreibung zwischen einem Reibbelag der Bremsbacke und der Bremsscheibe in Umfangsrichtung der Bremsscheibe auf die Bremsbacke wirkt. Durch Multiplikation der Umfangskraft mit dem Abstand des Angriffspunkts der Umfangskraft von der Drehachse der Räder lässt sich das Bremsmoment ermitteln.

Bei der aus der WO88/04741 bekannten Scheibenbremse wird die Klemmkraft entweder hydraulisch oder mittels eines Elektromotors erzeugt. Im Falle einer motorischen Klemmkrafterzeugung wird die Rotationsbewegung einer Motorwelle zunächst mittels eines Planetengetriebes untersetzt und anschließend mittels einer eine Mutter-Spindel-Anordnung umfassenden Aktuatoreinrichtung in eine Translationbewegung umgesetzt. Ein Kolben der Aktuatoreinrichtung überträgt die Translationbewegung auf eine der beiden Bremsbacken und presst diese gegen die Bremsscheibe. Da die Scheibenbremse als Schwimmsattel-Scheibenbremse ausgestaltet ist, wird in bekannter Weise auch die nicht unmittelbar mit dem Kolben zusammenwirkende Bremsbacke gegen die Bremsscheibe gepresst.

Zukünftige Bremsanlagen erfordern für Steuer- und Regelzwecke eine exakte Erfassung der bei einem Bremsvorgang auftretenden Kräfte. Es ist daher üblich, Scheibenbremsen mit einem oder mehreren Kraftwandlern zu bestücken und diese Kraftwandler mit Steuer- und Regelschaltkreisen zu koppeln. Als Kraftwandler vermag jede Einrichtung zu fungieren, welche eine auf den Kraftwandler wirkende Kraft in eine von dieser Kraft verschiedene physikalische Größe wandelt.

In der DE 196 39 686 A1 wird eine derartige, mit Kraftwandlern bestückte Scheibenbremse beschrieben. Die Scheibenbremse besitzt zwei Kraftwandler, welche an je einer Befestigungsschraube angeordnet sind, mittels derer ein Bremssattel mit einem fahrzeugfesten Halter verbunden ist. Die Kraftwandler dienen zur Erfassung der Umfangskraft, welche von einer Steuereinrichtung eines nicht näher beschriebenen, elektromechanischen Radbremsaktors beim Einstellen der Klemmkraft berücksichtigt wird.

In der WO 99/37939 wird eine Scheibenbremse gemäss dem Oberbegriff des Anspruchs 1 beschrieben.

Der Erfindung liegt die Aufgabe zugrunde, eine Scheibenbremse anzugeben, welche einen im Hinblick auf Steuer- und Regelzwecke optimierten Aufbau besitzt.

Diese Aufgabe wird durch die Merkmale des Anspruchs 1 gelöst. Der Kraftwandler, welcher vollständig oder zumindest in Form einer oder mehrerer Kraftwandlerkomponenten zwischen der Aktuatoreinrichtung und wenigstens einer der Bremsbacken angeordnet sein kann, gestattet das Aufnehmen, Wandeln und/oder Erfassen wenigstens eines Teils der bei Erzeugung der Klemmkraft in die Aktuatoreinrichtung eingeleiteten Rückwirk- oder Reaktionskraft.

Zwischen dem Kraftwandler und der mindestens einen Bremsbacke kann eine Kraftübertragungseinrichtung angeordnet sein, welche mit dem Kraftwandler bei einem Anpressen der Bremsbacken an die Bremsscheibe unmittelbar oder mittelbar zusammenwirkt. Dieses Zusammenwirken zwischen Kraftübertragungseinrichtung und Kraftwandler findet vorzugsweise flächig statt. Der Kraftwandler ist daher zweckmäßigerweise derart ausgestaltet, dass er die Aufnahme einer flächig auf ihn wirkende Kraft gestattet.

Für den Kraftwandler stehen unterschiedliche Realisierungsmöglichkeiten zur Verfügung. Allen Realisierungsmöglichkeiten gemeinsam ist der funktionelle Aspekt, dass eine auf den Kraftwandler wirkende Kraft in eine von dieser Kraft verschiedene, z.B. elektrische oder mechanische Größe gewandelt wird. So kann beispielsweise daran gedacht werden, mittels des Kraftwandlers noch an seinem Einbauort unmittelbar das interessierende Messsignal in Gestalt von beispielsweise einer Spannungs- oder Widerstandsänderung zu erzeugen. In diesem Fall fungiert der Kraftwandler als herkömmlicher Kraftsensor. Es kann jedoch auch daran gedacht werden, die auf den Kraftwandler wirkende Kraft am Einbauort des Kraftwandlers zunächst in eine andere physikalische Messgröße, beispielsweise Druck, zu wandeln und das resultierende Drucksignal an einem vom Einbauort des Kraftwandlers beabstandeten Ort oder am Einbauort des Kraftwandlers auszuwerten. Das Auswerten dieser anderen physikalischen Messgröße kann eine erneute Wandlung beinhalten.

Gemäß einer bevorzugten Ausführungsform ist der Kraftwandler als Kraft-Widerstands-Wandler ausgebildet, welcher aus einer auf den Kraftwandler wirkenden Kraft ein elektrisch oder elektronisch auswertbares Widerstandssignal generiert. Diese Kraft-Widerstands-Wandlung kann einstufig oder mehrstufig erfolgen. Bei einer mehrstufigen Wandlung kann der Kraft-Widerstands-Wandler in einem ersten Schritt mittels eines Kraft-Druck-Wandlers das Kraftsignal in ein Drucksignal umsetzen, welches anschließend in einem zweiten Schritt von einem Druck-Widerstands-Wandler in eine Änderung eines elektrischen Widerstands gewandelt wird. Der Druck-Widerstands-Wandler ist vorzugsweise in Single-Chip-Technologie gefertigt. Sofern der Kraftwandler eine Widerstandswandlung durchgeführt, folgt die Auswertung des Kraftsignals zweckmäßigerweise nach dem Prinzip einer Wheatstoneschen Brücke.

Der Kraftwandler kann eine mit einem fluiden Medium gefüllte Kammer besitzen, welche von einer mit der Kraftübertragungseinrichtung zusammenwirkenden Membran verschlossen ist. Bei einer derartigen Ausgestaltung des Kraftwandlers bewirkt das Einleiten einer vorzugsweise flächigen Kraft in die Membran eine Erhöhung des Fluiddrucks innerhalb der Kammer. Es findet demzufolge eine Kraft-Druck-Wandlung statt. In einem nachfolgenden Schritt kann zur Ermittlung der auf die Membran wirkende Kraft die Druckerhöhung gemessen werden.

Wie bereits eingangs erläutert, ist der mindestens eine Kraftwandler in einem ersten Kraftübertragungsweg zwischen der Aktuatoreinrichtung und mindestens einer der Bremsbacken angeordnet. Zwischen der Aktuatoreinrichtung und mindestens einer der Bremsbacken kann noch ein zweiter Kraftübertragungsweg vorhanden sein, welcher den Kraftsensor umgeht. Der erste Kraftübertragungsweg und der zweite Kraftübertragungsweg verlaufen vorzugsweise zumindest abschnittsweise parallel zueinander, so dass sich die entlang des ersten Kraftübertragungswegs übertragene Kraft reduziert.

Der zweite Kraftübertragungsweg wird zweckmäßigerweise erst nach Überschreiten eines Kraftschwellenwerts aktiviert, um derart die auf den Kraftwandler maximal wirkende Kraft zu begrenzen. Über den zweiten Kraftübertragungsweg, welcher den Kraftwandler umgeht, kann daher zumindest diejenige Kraftkomponente übertragen werden, welche den Kraftschwellenwert überschreitet. Vorzugsweise beträgt der Kraftschwellenwert weniger als die Hälfte und idealerweise weniger als ein Viertel der maximal in die Aktuatoreinrichtung einleitbaren Kraft.

Die bereits erläuterte Kraftübertragungseinrichtung kann entweder im ersten Kraftübertragungsweg oder im zweiten Kraftübertragungsweg oder, zumindest bereichsweise, sowohl im ersten Kraftübertragungsweg als auch im zweiten Kraftübertragungsweg angeordnet sein. Gemäß einer bevorzugten Ausgestaltung der Erfindung ist die Kraftübertragungseinrichtung mit Steuermitteln beispielsweise in Gestalt eines ersten Anschlags versehen, welche es gestatten, den zweiten Kraftübertragungsweg definiert zu aktivieren. Umfasst die Kraftübertragungseinrichtung beispielsweise einen bezüglich des Kraftwandlers beweglichen Kolben, so kann dieser erste Anschlag zur Aktivierung des zweiten Kraftübertragungswegs von einer Durchmesserweiterung des Kolbens gebildet sein. Eine Aktivierung des zweiten Kraftübertragungswegs kann in diesem Fall dadurch erfolgen, dass die Durchmesserweiterung des Kolbens mit einem in Kraftübertragungsrichtung starr mit einer Komponente der Aktuatoreinrichtung gekoppelten zweiten Anschlag zusammenwirkt. Die Kraftübertragungsrichtung ist diejenige Richtung, in welcher bei einer Betätigung der Bremsbacken die dabei resultierende Reaktionskraft in die Aktuatoreinrichtung eingeleitet wird.

Zusätzlich zu dem Kolben oder anstatt des Kolbens kann die Kraftübertragungseinrichtung ein bezüglich des Kraftwandlers bewegliches und elastisches Reaktionselement umfassen. Dieses elastische Reaktionselement ist vorzugsweise im ersten Kraftübertragungsweg zwischen dem Kolben und dem Kraftwandler angeordnet. Das Reaktionselement ermöglicht aufgrund seiner elastischen Eigenschaften ein unmittelbares, beschädigungsloses Zusammenwirken mit dem Kraftwandler, vorzugsweise mit einer elastischen Membran des Kraftwandlers.

Die Aktuatoreinrichtung kann mit einer Aufnahme für den Kraftwandler versehen sein. Diese Aufnahme ist vorzugsweise in einem zentralen Bereich der Aktuatoreinrichtung angeordnet, um eine gleichmäßige Krafteinleitung in den Kraftwandler zu ermöglichen. Die Aufnahme kann einstückig mit einer weiteren Komponente der Aktuatoreinrichtung ausgebildet sein oder eine separate Komponente der Aktuatoreinrichtung bilden.

Die Aktuatoreinrichtung kann eine Führung für die Kraftübertragungseinrichtung besitzen. Es ist möglich, die Aufnahme für den Kraftwandler, welche Teil der Aktuatoreinrichtung ist, mit einer solchen Führung zu versehen. Zweckmäßigerweise besitzt die Aufnahme in diesem Fall eine im wesentlichen hohlzylindrische Gestalt, wobei ein den Bremsbacken zugewandter Teil der hohlzylindrischen Aufnahme als Führung für die Kraftübertragungseinrichtung fungiert und der Kraftwandler in einem den Bremsbacken abgewandten Grund der hohlzylindrischen Aufnahme angeordnet ist.

Sofern die Kraftübertragungseinrichtung das oben erläuterte elastische Reaktionselement umfasst, kann die Führung mit wenigstens einer Aussparung versehen sein, in welche das Reaktions-element im Falle seiner elastischen Deformation ausweichen kann. Durch das Vorsehen einer oder mehrerer derartiger Aussparungen wird eine Beschädigung des Kraftwandlers in Folge übermäßig hoher, in das Reaktionselement eingeleiteter Kräfte vermieden.

Was die Ausgestaltung der Aktuatoreinrichtung anbelangt, stehen unterschiedliche Konzepte zur Verfügung. Die Aktuatoreinrichtung kann motorisch oder hydraulisch betätigbar sein. Außerdem ist es möglich, ein und dieselbe Aktuatoreinrichtung sowohl hydraulisch als auch motorisch betätigbar auszugestalten. Bei einer derartigen Ausgestaltung der Aktuatoreinrichtung kann mittels der motorischen Betätigung eine Parkbremsfunktion realisiert werden. Gemäß einer bevorzugten Ausgestaltung der Erfindung ist die Scheibenbremse Teil einer elektromechanischen Bremsanlage.

Zweckmäßigerweise besitzt die Aktuatoreinrichtung der Scheibenbremse ein zumindest translatorisch bewegliches Aktuatorelement, welches je nach Ausgestaltung der Aktuatoreinrichtung zusätzlich noch in eine Rotationsbewegung versetzbar sein kann. Ein derartiges Aktuatorelement kann in einer Kraftübertragungsrichtung starr mit der Aufnahme für den Kraftsensor gekoppelt sein. So ist es denkbar, die Aufnahme einstückig mit dem translatorisch beweglichen Aktuatorelement auszubilden oder mittels einer Halterung für die Aufnahme an dem translatorisch beweglichen Aktuatorelement zu befestigen.

Gemäß einer bevorzugten Ausgestaltung der Erfindung besitzt das translatorisch bewegliche Aktuatorelement einen Hohlraum, in welchen sich die Aufnahme zumindest bereichsweise erstreckt. Ist das translatorische bewegliche Aktuatorelement beispielsweise als hohlzylindrischer Kolben ausgebildet, so kann sich die Aufnahme in den hohlzylindrischen Bereich des Kolbens erstrecken und beispielsweise mittels einer Halterung am Kolben befestigt sein.

Sofern die Aktuatoreinrichtung eine Mutter-Spindel-Anordnung umfasst, kann das translatorisch bewegliche Aktuatorelement entweder von der Mutter oder von der Spindel der Mutter-Spindel-Anordnung gebildet sein. Das translatorisch bewegliche Aktuator-element kann jedoch auch eine separate Komponente sein, welche mit der Mutter oder der Spindel der Mutter-Spindel-Anordnung vorzugsweise starr gekoppelt ist.

Die Erfindung besitzt eine Vielzahl möglicher Anwendungsgebiete. Die erfindungsgemäßen Vorteile kommen bei einer mit der erfindungsgemäßen Scheibenbremse ausgestatteten, elektromotorischen Fahrzeugbremsanlage besonders ausgeprägt zur Geltung. Ein Ausführungsbeispiel einer erfindungsgemäßen Scheibenbremse wird nachfolgend unter Bezugnahme auf die beigefügten, schematischen Zeichnungen näher erläutert. Es zeigt:
- Figur 1: eine Schnittansicht eines Teils eines ersten Ausführungsbeispiels einer erfindungsgemäßen Scheibenbremse;
- Figur 2: einen Teil eines Kraftwandlers der Scheibenbremse gemäß Fig. 1;
- Figur 3: eine Darstellung der Abhängigkeit eines Ausgangssignals des Kraftwandlers in Abhängigkeit von der auf eine Aktuatoreinrichtung der Scheibenbremse gemäß Fig. 1 wirkenden Reaktionskraft; und
- Figur 4: eine Schnittansicht gemäß Fig. 1 eines Teils eines zweiten Ausführungsbeispiels einer erfindungsgemäßen Scheibenbremse.

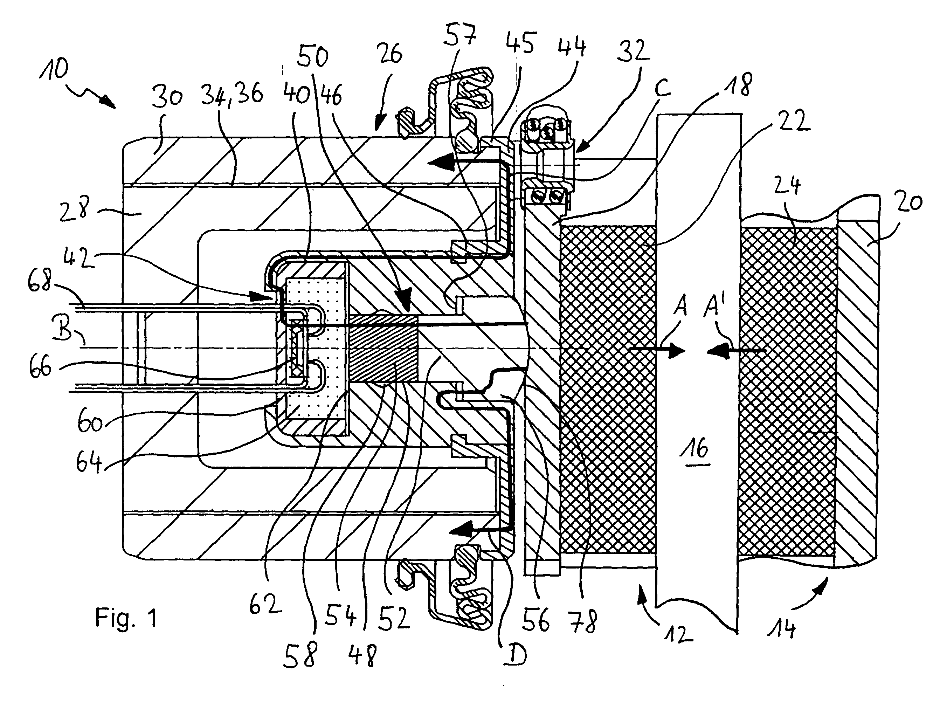

In Fig. 1 sind einige Komponenten einer erfindungsgemäßen Schwimmsattel-Scheibenbremse 10 gemäß einem ersten Ausführungsbeispiel der Erfindung dargestellt. Die Scheibenbremse 10 umfasst zwei Bremsbacken 12, 14, welche beidseits an eine Bremsscheibe 16 anpressbar sind. Jede der beiden Bremsbacken 12, 14 besitzt eine Trägerplatte 18, 20 und einen auf der Trägerplatte 18, 20 angeordneten Reibbelag 22, 24. Mittels des jeweiligen Reibbelags 22, 24 wirken die beiden Bremsbacken 12, 14 mit der Bremsscheibe 16 zusammen. Während des Zusammenwirkens der Bremsbacken 12, 14 mit der Bremsscheibe 16 wird eine entlang der Pfeile A, A' wirkende Klemmkraft erzeugt.

Zur Erzeugung der Klemmkraft ist ein in Fig. 1 nicht dargestellter Elektromotor vorgesehen, welcher in bekannter Weise mit einem in Fig. 1 ebenfalls nicht dargestellten Untersetzungsgetriebe zusammenwirkt. Eine Ausgangsseite des Untersetzungsgetriebes ist mit einer Aktuatoreinrichtung 26 verbunden. Die Aktuatoreinrichtung 26 setzt eine Rotationsbewegung des Elektromotors in eine Translationsbewegung zur translatorischen Betätigung der Bremsbacken 12, 14 um.

Im Ausführungsbeispiel gemäß Fig. 1 ist die Aktuatoreinrichtung 26 eine Mutter-Spindel-Anordnung, welche eine rotatorisch bewegliche, becherförmige Spindel 28 sowie eine koaxial zu Spindel 28 und radial außen bezüglich der Spindel 28 angeordnete, hohlzylindrische Mutter 30 umfasst. Die Bremsbacke 12 ist mittels einer dem Fachmann geläufigen Koppeleinrichtung 32 solchermaßen mit der Aktuatoreinrichtung 26 gekoppelt, dass die Bremsbacke 12 entlang des Pfeils A relativ zur Aktuatoreinrichtung 26 geführt verschieblich ist.

Die Aktuatoreinrichtung 26 ist derart ausgebildet, dass eine Rotationsbewegung der Spindel 28 um eine Längsachse B der Aktuatoreinrichtung 26 in einer Translationsbewegung der Mutter 30 entlang dieser Längsachse B umgesetzt wird. Zu diesem Zweck ist die becherförmige Spindel 28 mit einem Außengewinde 34 versehen, welches mit einem komplementären Innengewinde 36 der Mutter 30 zusammenwirkt. Die Mutter 30 ist innerhalb eines in Fig. 1 nicht dargestellten Gehäuses der Scheibenbremse 10 ebenfalls drehfest gelagert.

Die Spindel 28 kann auf unterschiedliche Art und Weise, beispielsweise mittels einer Bogenverzahnung, mit dem in Fig. 1 nicht dargestellten Untersetzungsgetriebe gekoppelt sein. Im Falle einer Bogenverzahnung besteht nicht nur eine drehfeste Verbindung zwischen Spindel 28 und Untersetzungsgetriebe, sondern die Spindel 28 ist um die Längsachse B in einem bestimmten Winkelbereich bewegbar. Während der Rotationsbewegung der Spindel 28 auftretende Querkräfte lassen sich auf diese Weise zuverlässig kompensieren.

Koaxial zu Spindel 28 und Mutter 30 und radial innen bezüglich Spindel 28 und Mutter 30 ist eine Aufnahme 40 für einen Kraftwandler 42 angeordnet. Die Aufnahme 40 ist mittels einer kreisringförmigen Halterung 44 an der Mutter 30 befestigt. Ein radial äußeres Ende 45 der Halterung 44 umgreift eine den Bremsbacken 12, 14 zugewandte Stirnseite der Mutter 30. Ein radial innen gelegener, flanschartig ausgestalteter Bereich 46 der Halterung 44 ist an der Aufnahme 40 befestigt.

Die Aufnahme 40 besitzt eine im Wesentlichen hohlzylindrische Gestalt, wobei ein den Bremsbacken 12, 14 zugewandter, hohlzylindrischer Abschnitt der Aufnahme 40 als Führung 48 für eine Kraftübertragungseinrichtung 50 fungiert. Die Kraftübertragungseinrichtung 50 setzt sich aus einem Kolben 52 und einem elastischen, zylindrischen Reaktionselement 54 aus Gummi zusammen. Der Kolben 52 besitzt in einem den Bremsbacken 12, 14 zugewandten Bereich eine Außendurchmesserweiterung 56, für welche in der Aufnahme 40 ein Anschlag in Gestalt einer Innendurchmesserverringerung 57 vorgesehen ist. Außerdem besitzt die hohlzylindrische Aufnahme 40 radial innen im Bereich des Reaktionselements 54 eine in umfangsrichtung verlaufende Nut 58, welche zur Aufnahme des Reaktionselements 54 im Falle seiner elastischen Deformation fungiert.

Der Kraftwandler 42 ist in der hohlzylindrischen Aufnahme 40 in einem hinteren, den Bremsbacken 12, 14 abgewandten Bereich gehalten. Der Kraftwandler 42 umfasst ein topfförmiges Element 60, welches auf seiner den Bremsbacken 12, 14 zugewandten Seiten von einer elastischen Membran 62 verschlossen ist. Das topfförmige Element 60 und die Membran 62 definieren zusammen eine mit Öl oder einem anderen fluiden Medium gefüllte Kammer 64. Innerhalb der Kammer 64 ist ein Druck-Widerstands-Wandler 66 angeordnet, welcher von einer Mehrzahl elektrischer Zuleitungen 68 elektrisch kontaktiert wird. Die elektrischen Zuleitungen 68 verlaufen sowohl durch den Boden des topfförmigen Elements 60 als auch durch den Boden der becherförmigen Spindel 28 und führen zu einem in Fig. 1 nicht dargestellten Regelschaltkreis.

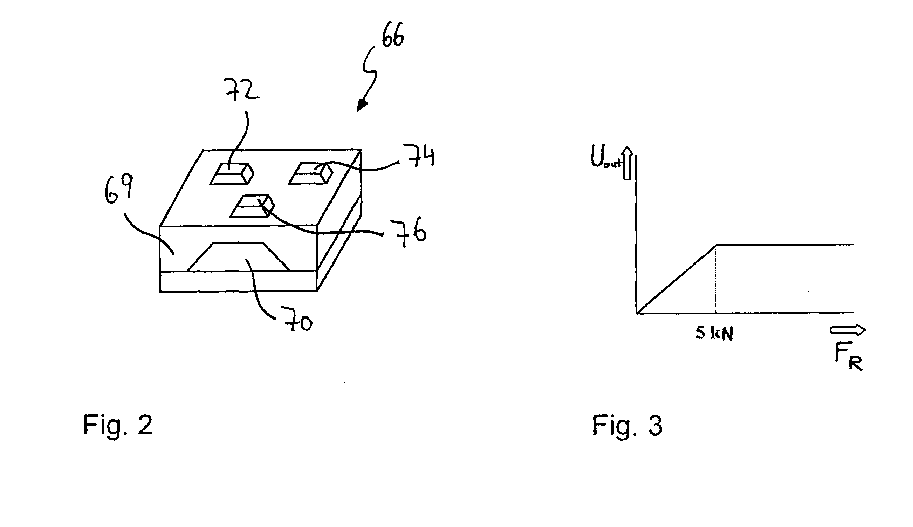

Der Druck-Widerstands-Wandler 66 gemäß Fig. 1 ist in Fig. 2 vergrößert dargestellt. Der in Single-Chip-Technologie gefertigte Druck-Widerstands-Wandler 66 umfasst ein Keramikgehäuse 69, welches eine Vakuumkammer 70 umgibt, sowie eine Mehrzahl von Wider-standselementen 72, 74, 76. Der Druck-Widerstands-Wandler 66 ist Teil einer Wheatstoneschen Brücke, so dass die Ermittlung des Drucks auf dem Weg einer Widerstandsmessung erfolgen kann. Der Druck-Widerstands-Wandler 66 ist gemäß dem Single-Chip-Aspekt auf einem in Fig. 2 nicht dargestellten Substrat angeordnet, auf welchem sich außerdem Komponenten eines Schaltkreises zur Auswertung von Widerstandsänderungen der Widerstandselemente 72, 74, 76 befinden. Dieser Schaltkreis erzeugt eine druckabhängige Ausgangsspannung Uₒᵤₜ.

Nachfolgend werden die Funktionsweise der in Fig. 1 dargestellten Scheibenbremse 10 sowie die Ermittlung der bei einer Betätigung der Bremsbacken 12, 14 auftretenden Reaktionskraft mittels des Kraftwandlers 42 näher erläutert.

Wird ausgehend von der in Fig. 1 dargestellten Ruhestellung der Scheibenbremse 10 zur Erzeugung einer Klemmkraft der in Fig. 1 nicht dargestellten Elektromotor in Betrieb genommen, überträgt das in Fig. 1 ebenfalls nicht dargestellte Untersetzungsgetriebe eine Rotationsbewegung des Elektromotors auf die Spindel 28 der Aktuatoreinrichtung 26. Die Rotationsrichtung der Spindel 28 ist zur Erzeugung einer Klemmkraft derart gewählt, dass die mit der Spindel 28 zusammenwirkende Mutter 30 in Fig. 1 nach rechts bewegt wird.

Von dieser translatorischen Bewegung der Mutter 30 werden auch die mittels der Halterung 44 starr mit der Mutter 30 gekoppelte hohlzylindrische Aufnahme 40, der im Grund der hohlzylindrischen Aufnahme 40 befestigte Kraftwandler 42 sowie die die Membran 62 des Kraftwandlers 42 kontaktierende Kraftübertragungseinrichtung 50 erfasst. Das Reaktionselement 54 der Kraftübertragungseinrichtung 50 befindet sich in Anlage sowohl an die Membran 62 als auch an den Kolben 52. Der Kolben 52 wiederum steht mit seiner bauchig geformten, dem Kraftwandler 42 abgewandten Stirnfläche 78 über die Aktuatoreinrichtung 26 hervor und befindet sich in Kontakt mit einer entsprechend geformten Vertiefung auf der dem Reibbelag 22 abgewandten Rückseite der Trägerplatte 18.

Die Bremsbacke 12 wird somit von der Translationsbewegung des Kolbens 52 erfasst und in Richtung des Pfeils A an die Bremsscheibe 16 angepresst. Aufgrund der konstruktiven Ausgestaltung der Scheibenbremse 10 als Schwimmsattel-Scheibenbremse wird als Reaktion auf das Anpressen der Bremsbacke 12 an die Bremsscheibe 16 auch die gegenüberliegende Bremsbacke 14 in Richtung des Pfeils A' an die Bremsscheibe 16 angepresst. Auf diese Weise wird eine in Richtung der Pfeile A, A' wirkende Klemmkraft erzeugt.

Gemäß dem physikalischen Prinzip actio = reactio wirkt bei der Erzeugung der Klemmkraft eine Reaktionskraft entlang eines ersten Kraftübertragungswegs C von der Bremsbacke 12 zurück auf die Aktuatoreinrichtung 26. Der erste Kraftübertragungsweg C umfasst die Kraftübertragungseinrichtung 50 in Gestalt des Kolbens 52 und des Reaktionselements 54, den Kraftwandler 42, dessen Aufnahme 40, die Halterung für die Aufnahme 40 sowie die Mutter 30. Die vom Kolben 52 auf das Reaktionselement 54 übertragene Reaktionskraft wird von dem flächig mit der Membran 62 des Kraftwandlers 42 zusammenwirkenden Reaktionselement 54 an den Kraftwandler 42 weitergeleitet. Die Membran 62 verschiebt sich daher ebenso wie die Kraftübertragungseinrichtung 50 in Fig. 1 nach links. Da das topfförmige Gehäuse 60 des Kraftwandlers 42 in der Aufnahme 40 fest verankert ist, kann das Gehäuse 60 dieser Verschiebung der Membran 62 nicht folgen. In Folge dessen erhöht sich der Druck innerhalb der Kammer 64 des Kraftwandlers 42. Es findet daher eine Kraft-Druck-Wandlung statt. Die Druckerhöhung innerhalb der Kammer 64 wird von dem in der Kammer 64 angeordneten Druck-Widerstands-Wandler 66 in eine Widerstandsänderung umgesetzt. Die Widerstandsveränderung wiederum erlaubt einen Rückschluss auf die entlang des ersten Kraftübertragungswegs C übertragene Rückwirkkraft und wird von einem mittels der elektrischen Leitungen 68 an den Druck-Widerstand-Wandler 66 angeschlossenen Regelschaltkreis ausgewertet und zu Regelungszwecken verwendet.

In der in Fig. 1 dargestellten Ruhestellung der Scheibenbremse 10 besteht ein gewisses axiales Spiel zwischen der Durchmesserweiterung 56 des Kolbens 52 und dem für die Durchmesserweiterung 56 vorgesehenen Anschlag in Gestalt der Innendurchmesserverringerung 57 der Aufnahme 40 für den Kraftwandler 42. Solange dieses Spiel nicht aufgebraucht ist, bewirkt eine translatorische Bewegung der Mutter 30 in Fig. 1 nach rechts ein von der entlang des ersten Kraftübertragungswegs C übertragenen Rückwirkkraft induziertes Verschieben des Kolbens 52 relativ zur Aufnahme 40 in Fig. 1 nach links.

Wie bereits erläutert, werden von dieser Verschiebung des Kolbens 52 nach links auch das Reaktionselement 54 und die Membran 62 erfasst. In Folge der Verschiebung des Kolbens 52 relativ zur Aufnahme 40 nach links wird das zwischen der Durchmesserweiterung 56 und dem an der Aufnahme 40 ausgebildeten Anschlag in Form der Innendurchmesserverringerung 57 vorhandene Spiel allmählich aufgebraucht. Gleichzeitig verformt sich das Reaktionselement 54 elastisch in die im Bereich der Führung 48 für die Kraftübertragungseinrichtung 50 ausgebildete Nut 58, da das in der Kammer 64 angeordnete Öl einer Verschiebung der Membran 62 in Fig. 1 nach links einen zunehmenden Widerstand entgegensetzt. Das elastische Verformen des Reaktionselements 54 in die Nut 58 erschwert das weitere Verschieben des Reaktionselements 54 in Fig. 1 nach links. Auf diese Weise wird verhindert, dass eine übermäßig hohe Rückwirkkraft auf die Membran 62 wirkt und diese beschädigt.

Wie erwähnt, führt ein Anstieg der Rückwirkkraft zu einer Verschiebung des Kolbens 52 bezüglich der Aufnahme 40 nach links. Ist das Spiel zwischen der Durchmesserweiterung 56 des Kolbens 52 und der als Anschlag ausgebildeten Innendurchmesserverringerung 57 der Aufnahme 40 aufgebraucht, stützt sich der Kolben 52 über seine Durchmesserweiterung 56 an der Aufnahme 40 ab, so dass ein zweiter Kraftübertragungsweg D aktiviert wird. Der zweite Kraftübertragungsweg D verläuft bereichsweise parallel zum ersten Kraftübertragungsweg C und umgeht den Kraftwandler 42. Der zweite Kraftübertragungsweg D umfasst den Kolben 52, die Aufnahme 40 für den Kraftwandler 42, die Halterung 44 für die Aufnahme 40, sowie die Mutter 30.

Sobald die Durchmesserweiterung 56 des Kolbens 52 bei einem bestimmten Schwellenwert der Rückwirkkraft in Anlage an den Anschlag in Form der Innendurchmesserverringerung 57 der Aufnahme 40 gelangt, wird die den Schwellenwert übersteigende Rückwirkkraftkomponente entlang des zweiten Kraftübertragungswerts D übertragen. Die auf den Kraftwandler 42 wirkende Komponente der Rückwirkkraft bleibt hingegen konstant. Genauer gesagt entspricht bei einem weiteren Anstieg der Rückwirkkraft die entlang des ersten Kraftübertragungswegs C übertragene Komponente der Rückwirkkraft exakt dem Schwellenwert, welcher erforderlich ist, um die Durchmesserweiterung 56 des Kolbens 52 in Anlage an die als Anschlag ausgebildete Innendurchmesserverringerung 57 der Aufnahme 40 zu bringen.

Das "Hinzuschalten" des zweiten Kraftübertragungswegs D nach Überschreiten eines Schwellenwerts der Rückwirkkraft macht sich auch in dem Ausgangssignal des Druck-Widerstands-Wandlers 66 bemerkbar. Dieser Sachverhalt ist in Fig. 3 dargestellt. Fig. 3 zeigt die Abhängigkeit einer Ausgangsspannung Uₒᵤₜ des Druck-Widerstands-Wandlers 66 in Abhängigkeit von der in die Mutter 30 eingeleiteten Reaktionskraft F_{R}.

Wie sich aus Fig. 3 ergibt, steigt die Ausgangsspannung Uₒᵤₜ zunächst linear mit zunehmender Rückwirkkraft F_{R} an. Dies entspricht dem Fall, dass die Rückwirkkraft F_{R} ausschließlich über den ersten Kraftübertragungsweg C übertragen wird. Bei einem Schwellenwert von F_{R} = 5 kN gelangt die Durchmesserweiterung 56 des Kolbens 52 schließlich in Anlage an die Innendurchmesserverringerung 57 der Aufnahme 40. Dies entspricht einer Aktivierung des den Kraftwandler 42 umgehenden zweiten Kraftübertragungswegs D. Die den Schwellenwert von 5 kN übersteigende Komponente der Rückwirkkraft F_{R} wird vollständig entlang des zweiten Kraftübertragungswegs D in die Mutter 30 eingeleitet. Obwohl die Rückwirkkraft F_{R} also weiterhin ansteigt, bleibt die entlang des ersten Kraftübertragungswegs C übertragene Komponente der Rückwirkkraft konstant. Wie sich aus Fig. 3 ergibt, ist aus diesem Grund auch die Ausgangsspannung des Druck-Widerstands-Wandlers 66 oberhalb des Schwellenwerts von 5 kN konstant. Eine Beschädigung des Kraftwandlers 42 aufgrund einer den Schwellenwert übersteigenden Rückwirkkraft wird daher verhindert.

In der Praxis hat sich gezeigt, dass ein Messbereich in der Größenordung von 2 - 5 kN für die erforderlichen Regelungszwecke ausreichend ist. Zur Messung von Rückwirkkräften oberhalb von 5 kN können andere Verfahren eingesetzt werden. So kann beispielsweise daran gedacht werden, höhere Rückwirkkräfte aus dem Verdrehwinkel des Ankers eines zur Betätigung der Aktuatoreinheit 26 verwendeten Elektromotors abzuleiten.

Im Rahmen der bisherigen Erörterung wurde das Erzeugen der Klemmkraft und das Ermitteln der erzeugten Klemmkraft aus der auftretenden Reaktionskraft beschrieben. Zum Abschalten oder Reduzieren der Klemmkraft wird der Elektromotor zur Betätigung der Aktuatoreinheit 26 derart angesteuert, dass die Spindel 28 ihre Rotationsrichtung ändert. In Folge der Umkehr der Rotationsrichtung wird die Mutter 30 in Fig. 1 nach links bewegt, wodurch sich die von den Bremsbacken 12, 14 erzeugte Klemmkraft reduziert.

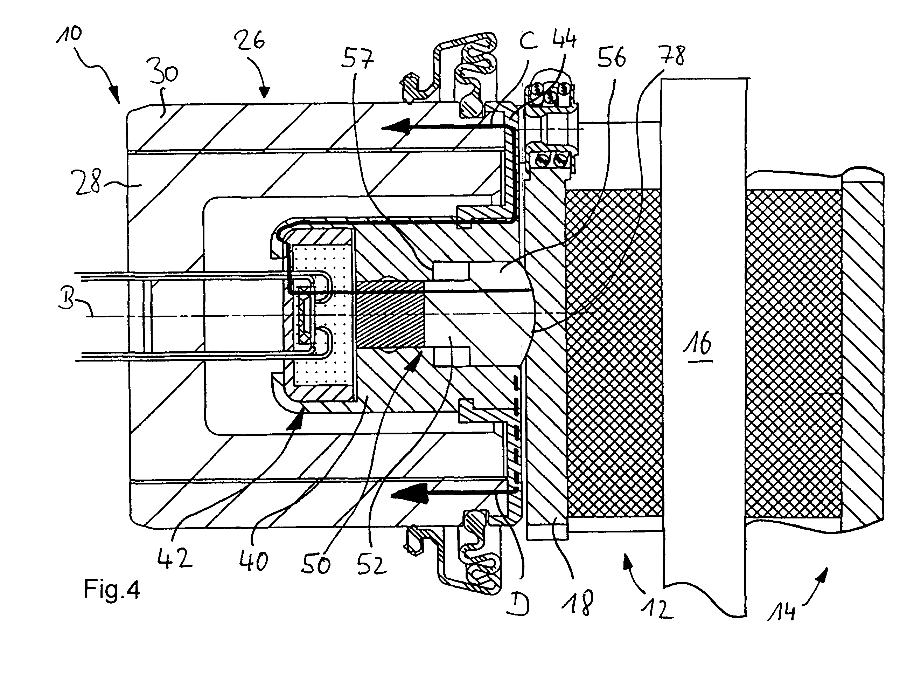

In Fig. 4 sind einige Komponenten einer erfindungsgemäßen Schwimmsattel-Scheibenbremse 10 gemäß einem zweiten Ausführungsbeispiel der Erfindung dargestellt. Die Scheibenbremse 10 gemäß dem zweiten Ausführungsbeispiel stimmt in Aufbau und Funktion im Wesentlichen mit der Schwimmsattel-Scheibenbremse gemäß dem unter Bezugnahme auf Fig. 1 erläuterten ersten Ausführungsbeispiel überein. Aus diesem Grund werden nachfolgend lediglich die konstruktiven und funktionellen Unterschiede zwischen der in Fig. 4 dargestellten Scheibenbremse 10 gemäß dem zweiten Ausführungsbeispiel und der in Fig. 1 gezeigten Scheibenbremse gemäß dem ersten Ausführungsbeispiel näher erläutert.

Der grundlegende Unterschied zwischen der Scheibenbremse 10 gemäß Fig. 4 und der Scheibenbremse gemäß Fig. 1 besteht darin, dass das axiale Spiel zwischen der Innendurchmesserverringerung 57 der Aufnahme 40 und der dieser Innendurchmesserverringerung 57 zugewandten Stirnseite der Durchmesserweiterung 56 des Kolbens 52 größer ist als der Überstand der Stirnfläche 78 des Kolbens 52 über die Aktuatoreinrichtung 26. Dies bedeutet, dass die Innendurchmesserverringerung 57 nicht mehr als Anschlag für die Durchmesserweiterung 56 des Kolbens 52 fungieren kann. Eine Begrenzung der maximal auf den Kraftwandler 42 entlang des ersten Kraftübertragungswegs C wirkenden Kraft findet bei der Scheibenbremse 10 gemäß Fig. 4 dadurch statt, dass die Trägerplatte 18 der Bremsbacke 12 mit ihrem der Aktuatoreinrichtung 26 zugewandten Stirnseite flächig mit den der Trägerplatte 18 zugewandten Stirnseiten der ringförmigen Halterung 44 sowie der Aufnahme 40 zusammenwirken. Ein derartiges, flächiges Zusammenwirken zwischen der Trägerplatte 18 einerseits und der Halterung 44 sowie der Aufnahme 40 andererseits findet statt, sobald der Kolben 52 so weit in Fig. 4 nach links in Richtung auf den Kraftwandler 42 verschoben ist, dass der Überstand der Stirnfläche 78 des Kolbens 52 über die der Trägerplatte 18 zugewandten Stirnseiten der Aufnahme 40 und der Halterung 44 vollständig aufgebraucht ist.

Ein Vorteil des flächigen Zusammenwirkens zwischen der Trägerplatte 18 und der Aktuatoreinrichtung 26, genauer gesagt der Halterung 44 und der Aufnahme 40 der Aktuatoreinrichtung 26, ist die Tatsache, dass ein Verkippen der Bremsbacke 12 relativ zur Aktuatoreinrichtung 26 verhindert und die Krafteinleitung von der Bremsbacke 12 in die Aktuatoreinrichtung 26 verbessert wird. In Fig. 4 deutlich zu erkennen ist der zweite Kraftübertragungsweg D, welcher nach Überschreiten eines vorbestimmten Kraftschwellenwerts aktiviert wird. Im Bereich der Strichelung des Kraftübertragungswegs D erfolgt die vorteilhafte, flächige Kraftübertragung zwischen Trägerplatte 18 und Aktuatoreinrichtung 26 unter Umgehung des Kolbens 52 und damit der Kraftübertragungseinrichtung 50. Wie sich aus Fig. 4 ergibt, ist die Kraftübertragungsanordnung 50 und insbesondere deren Kolben 52 damit nicht länger Bestandteil des zweiten Kraftübertragungswegs D. Mit dieser Maßnahme wird sichergestellt, dass übermäßig hohe Reaktionskräfte keine Beschädigung der Kraftübertragungsanordnung 50 bewirken.

Obwohl die Erfindung anhand der beiden Ausführungsbeispiele im Zusammenhang mit einer motorbetätigbaren Scheibenbremse beschrieben wurde, kann die erfindungsgemäße Anordnung des Kraftwandlers 42 bezüglich der Aktuatoreinrichtung 26 und den Bremsbacken 12, 14 auch bei Scheibenbremsen mit hydraulisch betätigbarer Aktuatoreinrichtung Verwendung finden. Das bevorzugte Einsatzgebiet der Erfindung sind jedoch elektromechanische Bremsen, welche Kraftwandler für Steuer- oder Regelzwecke umfassen. Die Erfindung kann auch bei Scheibenbremsen zur Realisierung einer steuer- oder regelbaren Parkbremsfunktion zum Einsatz gelangen.

## Patentansprüche

1. Scheibenbremse (10), mit zwei zur Erzeugung einer Klemmkraft (A, A') beidseits an eine Bremsscheibe (16) anpressbaren Bremsbacken (12, 14) und einer Aktuatoreinrichtung (26) zur Betätigung mindestens einer der Bremsbacken (12, 14), wobei mindestens ein Kraftwandler (42) in einem ersten Kraftübertragungsweg (C) zwischen der Aktuatoreinrichtung (26) und mindestens einer der Bremsbacken (12, 14) angeordnet ist,
**dadurch gekennzeichnet, dass** bei Erzeugung der Klemmkraft (A, A'), der auf den Kraftwandler (42) maximal wirkende Kraftanteil begrenzt ist.

2. Scheibenbremse nach Anspruch 1,
**dadurch gekennzeichnet, dass** zwischen dem Kraftwandler (42) und der mindestens einen Bremsbacke (12, 14) eine Kraftübertragungseinrichtung (50) angeordnet ist.

3. Scheibenbremse nach Anspruch 2,
**dadurch gekennzeichnet, dass** die Kraftübertragungseinrichtung (50) flächig mit dem Kraftwandler (42) zusammenwirkt.

4. Scheibenbremse nach einem der Ansprüche 1 bis 3,
**dadurch gekennzeichnet, dass** der Kraftwandler (42) als Kraft-Widerstands-Wandler ausgebildet ist.

5. Scheibenbremse nach Anspruch 4,
**dadurch gekennzeichnet, dass** der Kraftwandler (42) einen Kraft-Druck-Wandler (60, 62, 64) und einen dem Kraft-Druck-Wandler (60, 62, 64) funktionell nachfolgenden Druck-Widerstands-Wandler (66) umfasst.

6. Scheibenbremse nach Anspruch 5,
**dadurch gekennzeichnet, dass** der Druck-Widerstands-Wandler (66) in Single-Chip-Technologie gefertigt ist.

7. Scheibenbremse nach einem der Ansprüche 2 bis 6,
**dadurch gekennzeichnet, dass** der Kraftwandler (42) eine mit einem Fluid gefüllte Kammer (64) besitzt, welche von einer mit der Kraftübertragungseinrichtung (50) zusammenwirkenden Membran (62) verschlossen ist.

8. Scheibenbremse nach einem der Ansprüche 1 bis 7,
**dadurch gekennzeichnet, dass** zwischen der Aktuatoreinrichtung (26) und wenigstens einer der Bremsbacken (12, 14) ein den Kraftwandler (42) umgehender zweiter Kraftübertragungsweg (D) vorhanden ist.

9. Scheibenbremse nach Anspruch 8,
**dadurch gekennzeichnet, dass** der zweite Kraftübertragungsweg (D) bei Überschreiten eines Kraftschwellenwertes aktivierbar ist.

10. Scheibenbremse nach Anspruch 9,
**dadurch gekennzeichnet, dass** über den zweiten Kraftübertragungsweg (D) zumindest diejenigen Kräfte übertragbar sind, welche den Kraftschwellenwert übersteigen.

11. Scheibenbremse nach einem der Ansprüche 8 bis 10,
**dadurch gekennzeichnet, dass** die Kraftübertragungseinrichtung (50) zumindest bereichsweise sowohl im ersten Kraftübertragungsweg (C) als auch im zweiten Kraftübertragungsweg (D) angeordnet ist.

12. Scheibenbremse nach einem der Ansprüche 8 bis 11,
**dadurch gekennzeichnet, dass** die Kraftübertragungseinrichtung (50) Steuermittel (56) zur Aktivierung des zweiten Kraftübertragungswegs (D) besitzt.

13. Scheibenbremse nach Anspruch 12,
**dadurch gekennzeichnet, dass** die Steuermittel zur Aktivierung des zweiten Kraftübertragungswegs (D) von einem ersten Anschlag (56) der Kraftübertragungseinrichtung (50) gebildet sind, welcher mit einem in Kraftübertragungsrichtung starr mit einer Komponente (40) der Aktuatoreinrichtung (26) gekoppelten zweiten Anschlag (57) zusammenwirkt.

14. Scheibenbremse nach einem der Ansprüche 2 bis 13,
**dadurch gekennzeichnet, dass** die Kraftübertragungseinrichtung (50) einen bezüglich des Kraftwandlers (42) beweglichen Kolben (52) umfasst.

15. Scheibenbremse nach einem der Ansprüche 2 bis 14,
**dadurch gekennzeichnet, dass** die Kraftübertragungseinrichtung (50) ein bezüglich des Kraftwandlers (42) bewegliches, elastisches Reaktionselement (54) umfasst.

16. Scheibenbremse nach Anspruch 15,
**dadurch gekennzeichnet, dass** das Reaktionselement (54) im ersten Kraftübertragungsweg (C) zwischen dem Kolben (52) und dem Kraftwandler (42) angeordnet ist.

17. Scheibenbremse nach einem der Ansprüche 1 bis 16,
**dadurch gekennzeichnet, dass** die Aktuatoreinrichtung (26) eine Aufnahme (40) für den Kraftwandler (42) besitzt.

18. Scheibenbremse nach Anspruch 17,
**dadurch gekennzeichnet, dass** die Aufnahme (40) für den Kraftwandler (42) eine Führung (48) für die Kraftübertragungseinrichtung (50) besitzt.

19. Scheibenbremse nach Anspruch 18,
**dadurch gekennzeichnet, dass** die Führung (48) für die Kraftübertragungseinrichtung (50) mindestens eine Nut (58) zur bereichsweisen Aufnahme eines Reaktionselements (54) im Falle seiner elastischen Deformation besitzt.

20. Scheibenbremse nach einem der Ansprüche 17 bis 19,
**dadurch gekennzeichnet, dass** die Aktuatoreinrichtung (26) ein zumindest translatorisch bewegliches Aktuatorelement (30) umfasst, welches in einer Kraftübertragungsrichtung starr mit der Aufnahme (40) gekoppelt ist.

21. Scheibenbremse nach Anspruch 20,
**dadurch gekennzeichnet, dass** das translatorisch bewegliche Aktuatorelement (30) einen Hohlraum besitzt, in welchen sich die Aufnahme (40) zumindest bereichsweise erstreckt.

22. Scheibenbremse nach einem der Ansprüche 1 bis 21,
**dadurch gekennzeichnet, dass** die Aktuatoreinrichtung (26) eine Mutter-Spindel-Anordnung (28, 30) umfasst.

23. Scheibenbremse nach Anspruch 22,
**dadurch gekennzeichnet, dass** das translatorisch bewegliche Aktuatorelement (30) eine Komponente der Mutter-Spindel-Anordnung (28, 30) ist oder mit einer Komponente der Mutter-Spindel-Anordnung (28, 30) starr gekoppelt ist.

24. Scheibenbremse nach einem der Ansprüche 1 bis 23,
**dadurch gekennzeichnet, dass** die Aktuatoreinrichtung (26) eine Antriebsbewegung eines Motors in eine Betätigungsbewegung zur Betätigung mindestens einer der Bremsbacken (12, 14) umsetzt.

25. Scheibenbremse nach einem der Ansprüche 1 bis 24,
**dadurch gekennzeichnet, dass** die Aktuatoreinrichtung hydraulisch betätigbar ist.

## Claims

1. Disc brake (10), having two brake shoes (12, 14), which for generating a clamping force (A, A') are pressable against both sides of a brake disc (16), and an actuator device (26) for actuating at least one of the brake shoes (12, 14), wherein at least one force transducer (42) is disposed in a first force transmission path (C) between the actuator device (26) and at least one of the brake shoes (12, 14),
**characterized in that** the maximum component of force acting upon the force transducer (42) upon generation of the clamping force (A, A') is limited.

2. Disc brake according to claim 1,
**characterized in that** a force transmission device (50) is disposed between the force transducer (42) and the at least one brake shoe (12, 14).

3. Disc brake according to claim 2,
**characterized in that** the force transmission device (50) interacts in a two-dimensional manner with the force transducer (42).

4. Disc brake according to one of claims 1 to 3,
**characterized in that** the force transducer (42) is designed as a force-to-resistance transducer.

5. Disc brake according to claim 4,
**characterized in that** the force transducer (42) comprises a force-to-pressure transducer (60, 62, 64) and a pressure-to-resistance transducer (66) disposed functionally downstream of the force-to-pressure transducer (60, 62, 64).

6. Disc brake according to claim 5,
**characterized in that** the pressure-to-resistance transducer (66) is manufactured by single-chip technology.

7. Disc brake according to one of claims 2 to 6,
**characterized in that** the force transducer (42) has a chamber (64) filled with a fluid and sealed by a diaphragm (62) which interacts with the force transmission device (50).

8. Disc brake according to one of claims 1 to 7,
**characterized in that** between the actuator device (26) and at least one of the brake shoes (12, 14) a second force transmission path (D) is provided, which bypasses the force transducer (42).

9. Disc brake according to claim 8,
**characterized in that** the second force transmission path (D) may be activated when a force threshold value is exceeded.

10. Disc brake according to claim 9,
**characterized in that** at least the forces exceeding the force threshold value are transmissible via the second force transmission path (D).

11. Disc brake according to one of claims 8 to 10,
**characterized in that** the force transmission device (50) is disposed at least in sections both in the first force transmission path (C) and in the second force transmission path (D).

12. Disc brake according to one of claims 8 to 11,
**characterized in that** the force transmission device (50) has control means (56) for activating the second force transmission path (D).

13. Disc brake according to claim 12,
**characterized in that** the control means for activating the second force transmission path (D) are formed by a first stop (56) of the force transmission device (50), which stop interacts with a second stop (57), which is coupled in force transmission direction rigidly to a component (40) of the actuator device (26).

14. Disc brake according to one of claims 2 to 13,
**characterized in that** the force transmission device (50) comprises a piston (52) movable relative to the force transducer (42).

15. Disc brake according to one of claims 2 to 14,
**characterized in that** the force transmission device (50) comprises an elastic reaction element (54) movable relative to the force transducer (42).

16. Disc brake according to claim 15,
**characterized in that** the reaction element (54) is disposed in the first force transmission path (C) between the piston (52) and the force transducer (42).

17. Disc brake according to one of claims 1 to 16,
**characterized in that** the actuator device (26) has a receiver (40) for the force transducer (42).

18. Disc brake according to claim 17,
**characterized in that** the receiver (40) for the force transducer (42) has a guide (48) for the force transmission device (50).

19. Disc brake according to claim 18,
**characterized in that** the guide (48) for the force transmission device (50) has at least one groove (58) for receiving in sections a reaction element (54) in the event of its elastic deformation.

20. Disc brake according to one of claims 17 to 19,
**characterized in that** the actuator device (26) comprises an at least translationally movable actuator element (30), which is coupled in a force transmission direction rigidly to the receiver (40).

21. Disc brake according to claim 20,
**characterized in that** the translationally movable actuator element (30) has a hollow space, into which the receiver (40) extends at least in sections.

22. Disc brake according to one of claims 1 to 21,
**characterized in that** the actuator device (26) comprises a nut/spindle arrangement (28, 30).

23. Disc brake according to claim 22,
**characterized in that** the translationally movable actuator element (30) is a component of the nut/spindle arrangement (28, 30) or is coupled rigidly to a component of the nut/spindle arrangement (28, 30).

24. Disc brake according to one of claims 1 to 23,
**characterized in that** the actuator device (26) converts a driving motion of a motor into an actuating motion for actuating at least one of the brake shoes (12, 14).

25. Disc brake according to one of claims 1 to 24,
**characterized in that** the actuator device is adapted to be actuated hydraulically.

## Revendications

1. Frein à disque (10) comprenant deux mâchoires de frein (12, 14) pouvant être pressées contre les deux faces d'un disque de frein (16) pour générer une force de serrage (A, A') et un dispositif d'actionnement (26) servant à actionner un moins une des mâchoires de frein (12, 14), au moins un transducteur de force (42) étant disposé dans un premier chemin de transmission de force (C) entre le dispositif d'actionnement (26) et au moins une des mâchoires de frein (12, 14),
**caractérisé en ce que** la proportion de force qui agit au maximum sur le transducteur de force (42) est limitée lors de la genèse de la force de serrage (A, A').

2. Frein à disque selon la revendication 1,
**caractérisé en ce qu'**un élément de transmission de force (50) est disposé entre le transducteur de force (42) et la mâchoire de frein (12, 14).

3. Frein à disque selon la revendication 2,
**caractérisé en ce que** l'élément de transmission de force (50) coopère en surface avec le transducteur de force (42).

4. Frein à disque selon l'une des revendications 1 à 3,
**caractérisé en ce que** le transducteur de force (42) est conçu sous forme de transducteur de force et de résistance,

5. Frein à disque selon la revendication 4,
**caractérisé en ce que** le transducteur de force (42) comprend un transducteur de force et de pression (60, 62, 64) ainsi qu'un transducteur de pression et de résistance (66) fonctionnant en aval du transducteur de force et de pression (60, 62, 64).

6. Frein à disque selon la revendication 5,
**caractérisé en ce que** le transducteur de pression et de résistance (66) est réalisé en technologie single-chip.

7. Frein à disque selon l'une des revendications 2 à 6,
**caractérisé en ce que** le transducteur de force (42) possède une chambre (64) contenant un fluide, laquelle chambre est fermée par une membrane (62) coopérant avec l'élément de transmission de force (50).

8. Frein à disque selon l'une des revendications 1 à 7,
**caractérisé en ce qu'**il est prévu entre le dispositif d'actionnement (26) et au moins une des mâchoires de frein (12, 14) un second chemin de transmission de force (D) contournant le transducteur de force (42).

9. Frein à disque selon la revendication 8,
**caractérisé en ce que** le second chemin de transmission de force (D) peut être activé lorsque la force dépasse une valeur seuil.

10. Frein à disque selon la revendication 9,
**caractérisé en ce que** pour le moins les forces dépassant la valeur seuil peuvent être transmises via le second chemin de transmission de force (D).

11. Frein à disque selon l'une des revendications 8 à 10,
**caractérisé en ce que** le dispositif de transmission de force (50) est disposé pour le moins partiellement aussi bien dans le premier chemin de transmission de force (C) que dans le second chemin de transmission de force (D).

12. Frein à disque selon l'une des revendications 8 à 11,
**caractérisé en ce que** le dispositif de transmission de force (50) possède des moyens de commande (56) pour l'activation du second chemin de transmission de force (D).

13. Frein à disque selon la revendication 12,
**caractérisé en ce que** les moyens de commande servant à l'activation du second chemin de transmission de force (D) sont formés par une première butée (56) de l'élément de transmission de force (50), laquelle butée coopère avec une deuxième butée (57) accouplée de manière rigide dans le sens de transmission de la force à un composant (40) du dispositif d'actionnement (26).

14. Frein à disque selon l'une des revendications 2 à 13,
**caractérisé en ce que** le dispositif de transmission de force (50) comprend un piston (52) mobile par rapport au transducteur de force (42).

15. Frein à disque selon l'une des revendications 2 à 14,
**caractérisé en ce que** le dispositif de transmission de force (50) comprend un élément de réaction (54) élastique mobile par rapport au transducteur de force (42).

16. Frein à disque selon la revendication 15,
**caractérisé en ce que** l'élément de réaction (54) est disposé dans le premier chemin de transmission de force (C) entre le piston (52) et le transducteur de force (42).

17. Frein à disque selon l'une des revendications 1 à 16,
**caractérisé en ce que** le dispositif d'actionnement (26) possède un logement (40) pour le transducteur de force (42).

18. Frein à disque selon la revendication 17,
**caractérisé en ce que** le logement (40) pour le transducteur de force (42) possède un système de guidage (48) pour le dispositif de transmission de force (50).

19. Frein à disque selon la revendication 18,
**caractérisé en ce que** le système de guidage (48) pour le dispositif de transmission de force (50) possède au moins une rainure (58) pour le logement partiel d'un élément de réaction (54) dans le cas de sa déformation élastique.

20. Frein à disque selon l'une des revendications 17 à 19,
**caractérisé en ce que** le dispositif d'actionnement (26) comprend un élément d'actionnement (30) mobile pour le moins en translation, lequel élément est accouplé au logement (40) de manière rigide dans un sens de transmission de la force.

21. Frein à disque selon la revendication 20,
**caractérisé en ce que** l'élément d'actionnement (30) mobile en translation possède une cavité dans laquelle s'étend pour le moins partiellement le logement (40).

22. Frein à disque selon l'une des revendications 1 à 21,
**caractérisé en ce que** le dispositif d'actionnement (26) comprend un agencement à broche et écrou (28, 30).

23. Frein à disque selon la revendication 22,
**caractérisé en ce que** l'élément d'actionnement (30) mobile en translation constitue un composant de l'agencement à broche et écrou (28, 30) ou est accouplé de manière rigide à un composant de l'agencement à broche et écrou (28, 30).

24. Frein à disque selon l'une des revendications 1 à 23,
**caractérisé en ce que** le dispositif d'actionnement (26) transforme un mouvement d'entraînement généré par un moteur en un mouvement d'actionnement servant à actionner au moins une des mâchoires de frein (12, 14).

25. Frein à disque selon l'une des revendications 1 à 24,
**caractérisé en ce que** le dispositif d'actionnement peut être actionné hydrauliquement.
